(19) Europäisches Patentamt / European Patent Office / Office européen des brevets

(11) **EP 4 415 304 B1**

(12) **EUROPEAN PATENT SPECIFICATION**

(45) Date of publication and mention
of the grant of the patent:
**19.02.2025 Bulletin 2025/08**

(21) Application number: **23382108.1**

(22) Date of filing: **07.02.2023**

(51) International Patent Classification (IPC):
*H04L 9/00* (2022.01)        *H04L 9/08* (2006.01)
*G06N 10/60* (2022.01)        *H04L 9/32* (2006.01)

(52) Cooperative Patent Classification (CPC):
**H04L 9/00; G06N 10/20; G06N 10/60;
H04L 9/0852; H04L 9/3236**

(54) **METHOD AND SYSTEM FOR MODIFYING DOCUMENT WITHOUT CHANGING HASH VALUE**

VERFAHREN UND SYSTEM ZUR ÄNDERUNG EINES DOKUMENTS OHNE ÄNDERUNG DES HASH-WERTES

PROCÉDÉ ET SYSTÈME DE MODIFICATION DE DOCUMENT SANS CHANGEMENT DE VALEUR DE HACHAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**14.08.2024 Bulletin 2024/33**

(73) Proprietor: **Multiverse Computing S.L.
20014 Donostia / San Sebastián (ES)**

(72) Inventors:
• **Orús, Román**
  **20014 Donostia / San Sebastián (ES)**
• **Bermejo, Pablo**
  **20014 Donostia / San Sebastián (ES)**
• **Aizpurua, Borja**
  **20014 Donostia / San Sebastián (ES)**

(74) Representative: **Sonnenberg Harrison
Partnerschaft mbB
Herzogspitalstraße 10a
80331 München (DE)**

(56) References cited:
**US-A1- 2022 292 385**

• WANG ZEGUO ET AL: "Variational quantum attacks threaten advanced encryption standard based symmetric cryptography", SCIENCE CHINA INFORMATION SCIENCES, SCIENCE CHINA PRESS, BEIJING, vol. 65, no. 10, 18 July 2022 (2022-07-18), XP037907604, ISSN: 1674-733X, [retrieved on 20220718], DOI: 10.1007/S11432-022-3511-5
• WINTERNITZ ROBERT S: "A Secure One-Way Hash Function Built from DES", SECURITY & PRIVACY, IEEE, IEEE SERVICE CENTER, LOS ALAMITOS, CA, US, 29 April 1984 (1984-04-29), pages 88, XP032704208, ISSN: 1540-7993, [retrieved on 20120706], DOI: 10.1109/SP.1984.10027
• JACK Y ARAZ ET AL: "Classical versus Quantum: comparing Tensor Network-based Quantum Circuits on LHC data", ARXIV.ORG, CORNELL UNIVERSITY LIBRARY, 201 OLIN LIBRARY CORNELL UNIVERSITY ITHACA, NY 14853, 21 February 2022 (2022-02-21), XP091162810
• ZEGUO WANG ET AL: "A Variational Quantum Attack for AES-like Symmetric Cryptography", ARXIV.ORG, CORNELL UNIVERSITY LIBRARY, 201 OLIN LIBRARY CORNELL UNIVERSITY ITHACA, NY 14853, 7 May 2022 (2022-05-07), XP091222329

**(Cont. next page)**

• DENISENKO D V ET AL: "Application of Grover's Quantum Algorithm for SDES Key Searching", JOURNAL OF EXPERIMENTAL AND THEORETICAL PHYSICS, PLEIADES PUBLISHING, MOSCOW, vol. 128, no. 1, 8 April 2019 (2019-04-08), pages 25 - 44, XP036753782, ISSN: 1063-7761, [retrieved on 20190408], DOI: 10.1134/S1063776118120142

• DENISENKO DENIS: "Quantum differential cryptanalysis", JOURNAL OF COMPUTER VIROLOGY AND HACKING TECHNIQUES, SPRINGER PARIS, PARIS, vol. 18, no. 1, 3 September 2021 (2021-09-03), pages 3 - 10, XP037700191, DOI: 10.1007/S11416-021-00395-X

2

## Description

Field of the Invention

The invention relates to a method and system for modifying a document without changing hash values of the document.

Background of the Invention

A hash function is any function that can be used to map data of arbitrary size to fixed-size values. The values returned by the hash function are called hash values, hash codes, digests, or simply hashes. The hash functions and their associated hash tables are used in data storage and retrieval applications to reduce the amount of storage size, but also to ensure data integrity and authentication of messages.

Data integrity is the maintenance of, and the assurance of, data accuracy and consistency and is an aspect that needs to be considered in the design, implementation, and usage of any system that stores, processes, or retrieves data. The overall intent of a method, such as a hash function, for data integrity is to ensure that the data is recorded or stored exactly as intended and, upon later retrieval of the stored data, ensure the retrieved stored data is the same as when the data was originally stored. The hash function used for data integrity aims to prevent unintended (or unintentional) changes to information in the data stored.

Any unintended changes to the stored data as the result of a storage, retrieval or processing operation, including malicious intent, unauthorized access, unexpected hardware failure, and human error, is failure of data integrity. These unintended changes can be as benign as a single pixel in an image appearing with a different color than was originally recorded to the loss of vacation pictures or data from a business-critical database.

There are several reports about methods for breaking hash functions. For example, Laurent and Perrin presented a paper "SHA-1 is a shamble" at the USENIX Security Conference in 2020. The paper is available at https://eprint.iacr.org/2020/014.pdf (accessed on 15 November 2022). The reports about the methods for breaking hash functions are often presented in the context of the implications for security and consistency of data.

WANG ZEGUO et al. "Variational quantum attacks threaten advanced encryption standard based symmetric cryptography", SCIENCE CHINA INFORMATION SCIENCES, published on 18 July 2022, describes a variational quantum attack algorithm (VQAA) for classical advanced encryption standard (AES)-like symmetric cryptography, exemplified by the simplified-data encryption standard (S-DES).

WINTERNITZ ROBERT S: "A Secure One-Way Hash Function Built from DES", SECURITY & PRIVACY, IEEE, IEEE SERVICE CENTER, LOS ALAMITOS, CA, US, published on 29 April 1984 describes a secure one-way hash function built from DES.

JACK Y ARAZ ET AL: "Classical versus Quantum: comparing Tensor Network-based Quantum Circuits on LHC data", published on 21 February 2022, provides a comparison between classical Tensor Networks and Tensor Network-inspired quantum circuits in the context of Machine Learning on simulated LHC data.

US 2022/292385 A1, SAUVAGE FREDERIC [GB], filed on 15 September 2022, describes a method and system provided for optimizing parameters of a parametrized quantum Circuit (PQC) using machine learning to train a flexible initializer for arbitrarily-sized parametrized quantum circuits.

The following prior art documents are also of relevance:

XP091222329 "A Variational Quantum Attack for AES-like Symmetric Cryptography" published 07-05-2022 from ZeGuo Wang, ShiJie Wei, Gui-Lu Long & Lajos Hanzo

XP036753782 "Application of Grover's Quantum Algorithm for SDES Key Searching" from Denisenko D.V, Nikitenkova M.V published 08-04-2019

and XP037700191 "Quantum differential cryptanalysis" from Denisenko Denis publsihed 03-09-2021.

There are, however, cases in which it is desired to modify the stored data from which the hash function was generated but to maintain the original generated hash value. This has not been possible in the art, but the advent of quantum computing suggests that this may be practical in the future.

The application of quantum computing offers the potential to overcome this challenge using optimization algorithms. Currently we are in the noisy intermediate-scale quantum (NISQ) era at which real-life quantum computing systems are characterized by a number of restrictions, such as a low number of qubits, low fidelity, and shallow quantum circuits. Under these restrictions, various classical-quantum hybrid algorithms have been proposed, including the variational quantum algorithm (VQA) and the Quantum Approximate Optimization Algorithm (QAOA). VQA and QAOA quantum-classical hybrid algorithms have been found to have significant advantages in solving combinatorial optimization and Hamiltonian ground state problems.

Summary of the Invention

This document will describe a computer-implemented method to attack hash functions and to generate a hash value from a modified document.

The method and system described in this document enables part of the data in a document, such as a variable string, to be modified in the document but still produce the same hash value when passed to a hash function generator.

The method for modifying the variable string in a document and generating a required hash value will now be outlined. The document comprises both the variable string and a fixed string. The term "string" is used in this context to indicate a sequence of characters in the document. The method comprises constructing a Hamiltonian based on the variable string and then encoding the variable string into a quantum circuit comprising a plurality of qubits. A hash function generator generates a hash value from the fixed string and the output of the quantum circuit. A measurement device measures a superposition of the variable string by a quantum state tomography implemented individually for the plurality of the qubits. Then an overlap is determined between the generated hash value and a true hash value. On reaching a zero-overlap (or a substantially zero overlap) value, the parameters of the quantum circuit are determined for the variable string, otherwise optimizing the parameters of the quantum circuit.

The step of optimising the parameters of the circuit uses a classical optimization algorithm, such as, but not limited to, a gradient descent method.

The encoding of the variable string into the quantum circuit is one of encoding into a parameterized quantum circuit or a tensor network and the constructing of the Hamiltonian comprises creating a graph with a plurality of nodes representing the bits of the variable string.

The determining of the overlap is carried out by calculating the Hamming distance between the generated hash value and the true hash value.

A system for modifying a variable string in a document and generating a required hash value is also disclosed. The system comprises at least one input/out device for inputting the document, at least one quantum circuit with a plurality of qubits for encoding the variable string, a hash function generator for creating hash values from an output of the at least one quantum circuit, a measurement device for measurement a superposition of the variable string by a quantum state tomography implemented individually for the plurality of the qubits, a comparator for comparing the created hash values with a true hash value, and at least one optimization element for adjusting the parameters of the quantum circuit.

The quantum circuit is implemented as one of a quantum annealer or a quantum gate computer and can be is implemented in a quantum computer or simulated in a classical computer.

Description of the Figures

Fig. 1 shows an overview of a hybrid classical-quantum system.
Fig. 2 shows an outline of the method.
Fig. 3 shows elements used in the method.
Fig. 4 shows a 3-regular graph.
Fig. 5 shows a parameterized quantum circuit.
Fig. 6 shows Bloch spheres.

Detailed Description of the Invention

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

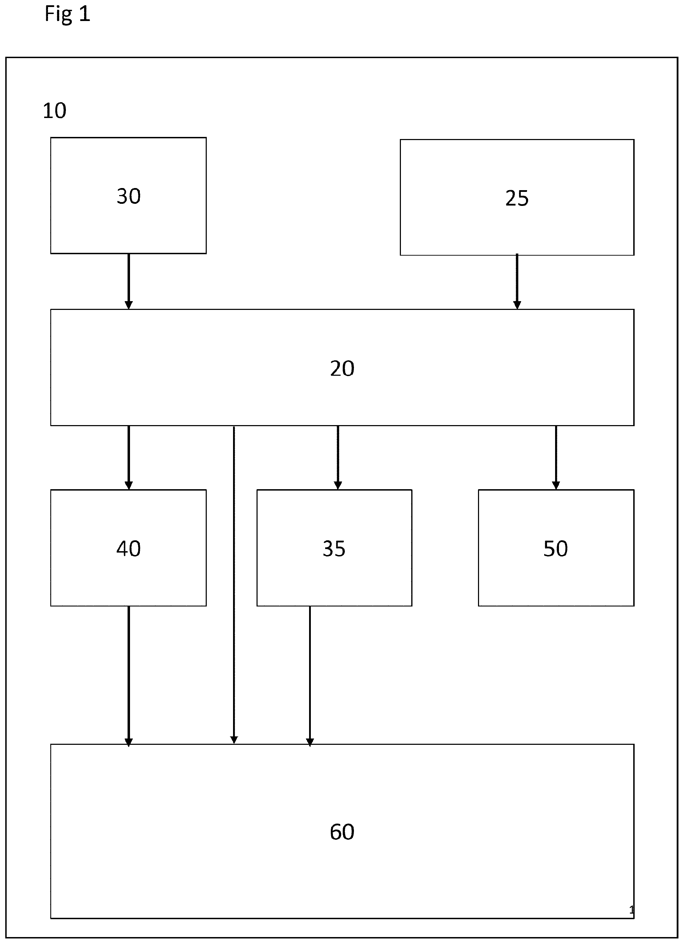

Fig. 1 shows an overview of a typical hybrid classical-quantum system which can be used for performing the method set out in this document. Fig. 1 shows an overview of a computing system 10 for implementing the method of this document. The computing system 10 is, for example, a hybrid quantum and classical system and comprises, in an example, a (classical) central processing unit 20 which is connected to a data storage unit 25 (i.e., one or more memory devices), and a plurality of input/output devices 30. The input/output devices 30 enable input of one or more images and an output of a result for the one or more of the images.

A graphics processing unit 35 for processing vector calculations and a field programmable gate array (FGPA) 40 for control logic that can also be connected to the central processing unit 20. A quantum processor 50 (also termed quantum accelerator) is connected to the classical central processing unit 20. In an alternative embodiment, the quantum processor 50 is emulated on a classical processor.

In one implementation of the computing system 10, the quantum processor 50 is a gate-based quantum processor. Alternatively, the quantum processor 50 could be a quantum annealing processor. It is also possible to use a quantum processor 50 which is a quantum annealing system. The computing system 10 is connected to a computer network 60, such as the Internet. It will be appreciated that the computing system 10 of Fig. 1 is merely exemplary and other units or elements may be present in the computing system 10. It will also be appreciated that there may be many input/output (I/O) devices 30 located at multiple locations and that there may be a plurality of data storage units 25 also located at multiple locations. The many I/O devices 30 and data storage units 25 are connected by the computer network 60.

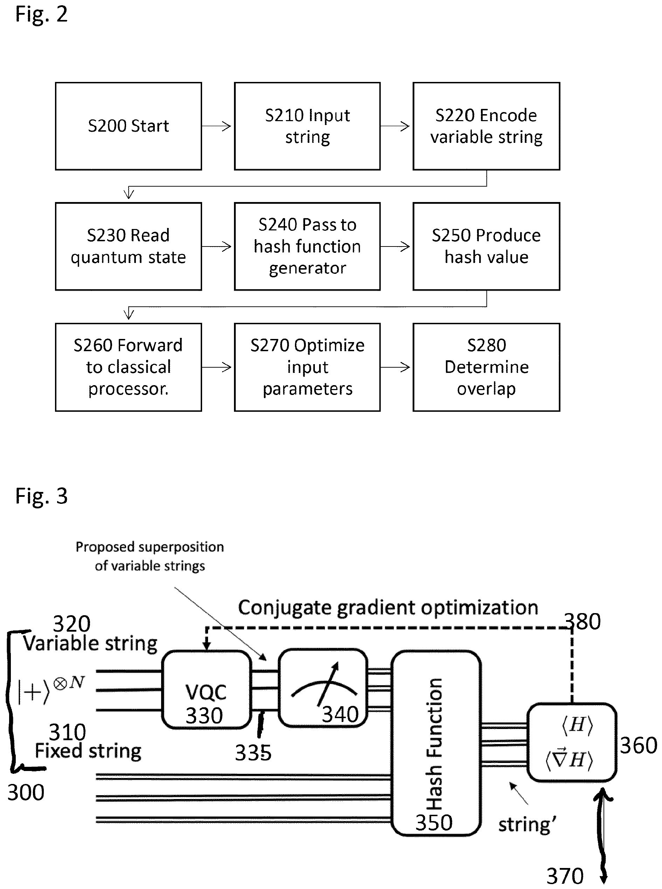

The method is illustrated in Figs. 2 and 3 and will now be described. The method starts in step S200. A document 300 has two components: a fixed string 310 with a set of data, such as a sequence of characters or set of pixels, which do not need to be changed and a variable string 320 with a set of data which needs to be changed. One example of the variable string could be correction of data or the replacement of a signature on the document 300.

In a first step S210, the document 300 with both the fixed string 310 and the variable string 320 is input into the system 100 through one (or more) of the input/output devices 30 and, in step S220, a Hamiltonian is constructed whose ground state corresponds to the variable string 320. The construction of the Hamiltonian is outlined below.

The variable string 320 is encoded in step S220 into an adjustable quantum state by a quantum circuit which is in this case a parameterized quantum circuit (PQC) 330 (which is also known as an ansatz). PQC output 335 of the parameterized quantum circuit 320 is a superposition of values and read out in step S230 by a measurement device 340 and passed in step S240 as an input to a hash function generator 350 in the (classical) central processing unit 20. The hash function generator 350 is not limited to particular hash functions. Non-limiting examples of hash functions include folding, division hashing, multiplicative hashing as well as other known hashing functions and indeed customized hash functions combining several known hash functions.

The hash function generator 350 takes as its input both the set of values from the PQC output 335 and the fixed string 310 and produces in step S250 a set of hash values which can be compared with a true hash value 370 in a comparator 360. The comparator 360 produces a Hamiltonian of the Hamming distances between the true hash value 370 and the set of hash values produced by the hash function generator 350.

The Hamiltonian is forward to a classical optimization algorithm 380 in the classical central processing unit 20. The optimization algorithm is used to adjust in step S270 the input parameters of the parameterized quantum circuit 330 to arrange for the output of the hash function generator 350 to have an overlap with the true hash value 370 in step S280. The overlap occurs when the Hamming distance is zero (or very close to zero). At this point, the parameters of the parameterized quantum circuit 330 are known and the output of the hash function generator 350 can be used to create from the variable string 320 a hash value which is the same as the true hash value 370 despite having a different variable string 320.

An example of the implementation of the VQAA will serve to illustrate this method. The variable string 320 is encoded in the Hamiltonian (step S220).

As noted above, the variational process (i.e., step S270) is started to find the lowest energy of the Hamiltonian. This is done by using each bit in the variable string 320 as a node to construct regular graphs. It is possible, for an 8-node network, to construct an n-regular (where n=1, 2...,7) graph. In practice, it is chosen that n=3 (although this is not limiting of the invention and other options may be also possible). It will be appreciated that the number of nodes is not limiting of the invention.

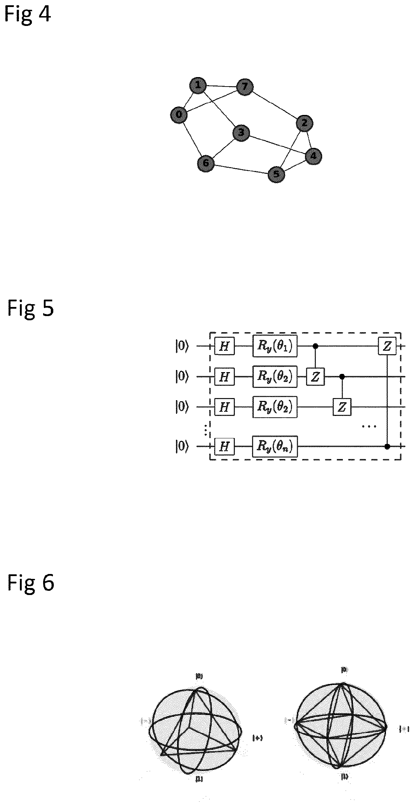

The known variable string 320 is encoded in the step S220 into the Hamiltonian ground state and this will now be described. Each of the eight bits of the variable string 320 is used as a node to construct an 8-node 3-regular graph. The value of the i-th node is denoted by $V(i)$, which is the value of the i-th bit. If there is a pair of nodes (i, j) in the graph that are connected, the term $w_{ij}Z_iZ_j$ is added into the Hamiltonian, where $Z$ is the Pauli-Z operator, $i, j \in \{0, 1, ..., 7\}$. The coefficient $w_{ij}$ is determined by $V(i)$ and $V(j)$: $w_{ij} = +1$ if $V(i) = V(j)$, and -1 otherwise. Additionally, the single-qubit terms $t_i Z_i$ are added, such that $t_i = 0.5$ if $V(i) = 1$, and -0.5 if $V(i) = 0$. The resulting 3-regular graph shown in Fig. 4. The corresponding Hamiltonian is:

$$H = w_{01}Z_0Z_1 + w_{06}Z_0Z_6 + w_{07}Z_0Z_7 + w_{13}Z_1Z_3 + w_{17}Z_1Z_7$$

$$+ w_{24}Z_2Z_4 + w_{25}Z_2Z_5 + w_{27}Z_2Z_7 + w_{34}Z_3Z_4 + w_{36}Z_3Z_6$$

$$+ w_{45}Z_4Z_5 + w_{56}Z_5Z_6 + \sum_{i=0}^{7} t_i Z_i.$$

The cost function $E(\beta)$ is the expectation value of the Hamiltonian where $|\beta>$ is the superposition of the variable string 320. The parameterized quantum circuit 310 is the ansatz shown in Fig. 5. It will be appreciated, however, that other variational quantum circuits could be implemented as well without further restrictions. The exemplary implementation shown in Fig. 5 and described in this document requires ten parameters $(\beta / \theta)$ and its circuit depth is 12. The initial state is prepared as the uniform superposition state. The PQC / ansatz 310 gives a linear combination of all possible values of the variable string.

On another implementation, the Hamiltonian is the Hamming distance between the bit strings.

The variational process starts to find the Hamiltonian with the lowest energy. This Hamiltonian with the lowest energy state is expected to contain the corresponding key. The superposition of the variable string 320 is measured in step S240 and the result is forwarded in step 260 to a classical optimization algorithm 380 running on a classical central processing unit 20 to adjust the input parameters of the quantum circuit 330. This variational process (adjusting the input parameters of the quantum circuit 330) continues until a zero overlap with the true hash value 370 is found.

In one non-limiting implementation, the classical optimization algorithm with best results is the Gradient Descent method with cut-off condition of -9, i.e., when the expectation of the Hamiltonian is less than -9, the first excited energy. GD is restarted when the norm of the gradient is lower than 0.8, the moment in which the parameters are randomly initialized. The learning rate is set to 1.08.

The VQAA can be improved in terms of better classical optimization algorithm, such as Adaptive Moment Estimation Algorithm (ADAM), better ansatz (less sequential ansatz to increase entanglement, in search) and better initial parameters (learning rate, cut-off condition, initial state).

In a further aspect, the method can be implemented using a quantum annealer, such as those from D-Wave, as the quantum processor 50. The quantum annealer is used to generate the variational states for the qubits (note: no non-orthogonal basis in this case). The variational parameters are the couplings of the D-Wave Hamiltonian and other annealing parameters (such as, but not limited to annealing schedule, extra magnetic fields).

A further aspect is the use of non-orthogonal qubit states: Current NISQ quantum devices have a limited number of qubits (as noted above) and are therefore only able to handle a small number of qubit variables. For current variational quantum algorithms in gate-based quantum computers, one qubit of the quantum computer is typically assigned to one bit variable of the cost function. The largest gate-based quantum computer as of today, built by IBM, has 433 superconducting qubits. Therefore, with the current approach, it is possible to optimize the cost functions up to 433 bits.

Current variational quantum optimization algorithms are based on e.g., Variational Quantum Eigensolvers (VQE). This approach fits very well into NISQ devices but is very hard to scale up to those cost functions involving many bits. This is because, in the current approach, each bit variable in the cost function corresponds to one qubit in the NISQ device. The NISQ devices have a limited number of qubits, and this limited number limits the applicability to large, realistic cost functions. This is limiting in cybersecurity applications.

One idea to overcome the problem of limited number of qubits is to modify the assignment between the quantum state of each individual qubit and the corresponding variable in the cost function. The method set out above has the correspondence as follows: $|0\rangle \rightarrow 0$, $|1\rangle \rightarrow 1$. In other words, a measurement in the 0/1 basis provides immediately the value of the bit variable. It is possible to extend the representability of classical discrete variables using different non-orthogonal states of one qubit. In particular, p maximally orthogonal states of one qubit could represent the values of a classical variable q = 0, 1, ..., p-1. The maximally orthogonal states of one qubit correspond to Platonic solids inside of the Bloch sphere of the qubit, as illustrated in Fig. 6.

Using this Bloch sphere representation, it is possible to fit much larger optimization problems in variational quantum algorithms in the NISQ devices for cybersecurity attacks. As an example, for a processor of 433 qubits, with 40 states per qubit, it would be possible to optimize cost functions of up to 17,320-bit variables.

To implement an improved variational optimization algorithm such as in VQAA using the qubit states as in Fig. 6, it is necessary to slightly modify the measurement at the end of the quantum circuit. In this implementation of the algorithm, instead of implementing a measurement in the computational 0/1 basis, a quantum state tomography is implemented individually for the qubits. Quantum state tomography is a technique that determines, via measurements, the exact individual quantum state of a qubit in the Bloch sphere. In this way, the readout of the measurements would not be 0/1, but rather the quantum state of each qubit in their respective Bloch spheres, which would correspond, for each qubit, to some state as the ones in Fig. 6.

Other non-orthogonal encodings can also be used, including polyhedral, discretized qubit angles and continuum optimization.

It will be further appreciated that the use of the quantum variational circuits 320 could be replaced by tensor networks. In this case, the variable string 320 is encoded into the tensor network and the values of the tensors in the tensor networks are updated using gradient descent.

The search can also be parallelized by using more than one quantum variational circuit 330 to search for minima.

One further method of accelerating the search for the key is to identify the local minima (rather than trying to find the global minima) and subsequently test which one(s) of the local minima result in the key.

Reference Numerals

| 10 | Computing system |
| 20 | Classical central processing unit |
| 25 | Data storage unit |
| 30 | Input/output devices |
| 35 | Graphical processing unit |
| 40 | Field programmable gate array |
| 50 | Quantum Processor |
| 60 | Computer network |

| 300 | Document |
| 310 | Fixed string |
| 320 | Variable string |
| 330 | Parameterised quantum circuit (PQC) |
| 335 | PQC output |
| 340 | Measurement device |
| 350 | Hash function generator |
| 360 | Comparator |
| 370 | True hash value |
| 380 | Optimization algorithm |

## Claims

1. A computer-implemented method for modifying a variable string (320) in a document (300) and generating a required hash value, wherein the document (300) comprises the variable string (320) and a fixed string (310), the method comprising:

  - constructing (S220) a Hamiltonian based on the variable string (320);
  - encoding (S230) the variable string (320) into a quantum circuit (330) comprising a plurality of qubits;
  - generating in a hash function generator (350) a hash value from the fixed string (310) and the output of the quantum circuit (330);
  - measuring a superposition of the variable string (320) by a measurement device (340), wherein the measuring is implemented by a quantum state tomography individually for the plurality of the qubits;
  - determining (S280) an overlap between the generated hash value and a true hash value (370); and
  - on reaching a zero overlap value, determining the variable string (320), otherwise optimising (S270) parameters of the quantum circuit (330).

2. The method of claim 1, wherein optimising (S270) of the parameters of the quantum circuit (330) comprises using a classical optimization algorithm.

3. The method of claim 2, wherein the classical optimization algorithm is a gradient descent method.

4. The method of claim 1, wherein the encoding (S230) of the variable string (320) into the quantum circuit (330) is one of encoding into a parameterized quantum circuit or a tensor network.

5. The method of any of the above claims, wherein the constructing (S220) of the Hamiltonian comprises creating a graph with a plurality of nodes representing the bits of the variable string (320).

6. The method of claim 5, wherein the graph is a 3-regular graph.

7. The method of any of the above claims, wherein the determining (S280) is carried out by calculating the Hamming distance between the generated hash value and the true hash value.

8. A system for modifying a variable string (320) in a document (300) and generating a required hash value, wherein the document (300) comprises the variable string (320) and a fixed string (310), the system comprising:

- at least one input/out device (30) for inputting the document (300);
- at least one quantum circuit (330) with a plurality of qubits, for encoding the variable string (320);
- a hash function generator (350) for creating hash values from an output (335) of the at least one quantum circuit (330);
- a measurement device (340) for measurement a superposition of the variable string (320) by a quantum state tomography implemented individually for the plurality of the qubits;
- a comparator (360) for comparing the created hash values with a true hash value (370); and
- at least one optimisation element for adjusting (S270) the parameters of the quantum circuit (330).

9. The system of claim 8, wherein the quantum circuit (330) is implemented as one of a quantum annealer or a quantum gate computer.

10. The system of claim 8 or 9, wherein the quantum circuit (330) is implemented in a quantum computer (50) or simulated in a classical computer (20).

**Patentansprüche**

1. Computerimplementiertes Verfahren zum Modifizieren einer variablen Zeichenfolge (320) in einem Dokument (300) und zum Erzeugen eines erforderlichen Hashwerts, wobei das Dokument (300) die variable Zeichenfolge (320) und eine feste Zeichenfolge (310) umfasst, das Verfahren umfassend:

- Konstruieren (S220) eines Hamiltonians basierend auf der variablen Zeichenfolge (320);
- Kodieren (S230) der variablen Zeichenfolge (320) in eine Quantenschaltung (330), eine Vielzahl von Qubits umfassend;
- Erzeugen eines Hashwerts aus der festen Zeichenfolge (310) und dem Ausgang der Quantenschaltung (330) in einem Hashfunktionsgenerator (350);
- Messen einer Superposition der variablen Zeichenfolge (320) durch eine Messvorrichtung (340), wobei das Messen durch eine Quantenzustandstomographie individuell für die Vielzahl der Qubits implementiert ist;
- Bestimmen (S280) einer Überlappung zwischen dem erzeugten Hashwert und einem echten Hashwert (370); und
- bei Erreichen eines Nullüberlappungswerts, Bestimmen der variablen Zeichenfolge (320), ansonsten Optimieren (S270) von Parametern der Quantenschaltung (330).

2. Verfahren nach Anspruch 1, wobei das Optimieren (S270) der Parameter der Quantenschaltung (330) das Verwenden eines klassischen Optimierungsalgorithmus umfasst.

3. Verfahren nach Anspruch 2, wobei der klassische Optimierungsalgorithmus ein Gradientenverfahren ist.

4. Verfahren nach Anspruch 1, wobei das Kodieren (S230) der variablen Zeichenfolge (320) in die Quantenschaltung (330) eines von Kodieren in eine parametrisierte Quantenschaltung oder ein Tensornetzwerk ist.

5. Verfahren nach einem der vorstehenden Ansprüche, wobei das Konstruieren (S220) des Hamiltonians das Erstellen eines Graphen mit einer Vielzahl von Knoten, die die Bits der variablen Zeichenfolge (320) repräsentieren, umfasst.

6. Verfahren nach Anspruch 5, wobei der Graph ein 3-regulärer Graph ist.

7. Verfahren nach einem der vorstehenden Ansprüche, wobei das Bestimmen (S280) durch Berechnen des Hamming-Abstands zwischen dem erzeugten Hashwert und dem echten Hashwert durchgeführt wird.

8. System zum Modifizieren einer variablen Zeichenfolge (320) in einem Dokument (300) und zum Erzeugen eines erforderlichen Hashwerts, wobei das Dokument (300) die variable Zeichenfolge (320) und eine feste Zeichenfolge (310) umfasst, das System umfassend:

- mindestens eine Eingabe-/Ausgabevorrichtung (30) zum Eingeben des Dokuments (300);
- mindestens eine Quantenschaltung (330) mit einer Vielzahl von Qubits zum Kodieren der variablen Zeichenfolge (320);
- einen Hashfunktionsgenerator (350) zum Erstellen von Hashwerten aus einem Ausgang (335) der mindestens einen Quantenschaltung (330);
- eine Messvorrichtung (340) zum Messen einer Superposition der variablen Zeichenfolge (320) durch eine Quantenzustandstomographie, individuell implementiert für die Vielzahl der Qubits;
- einen Komparator (360) zum Vergleichen der erstellten Hashwerte mit einem echten Hashwert (370); und
- mindestens ein Optimierungselement zum Anpassen (S270) der Parameter der Quantenschaltung (330).

9. System nach Anspruch 8, wobei die Quantenschaltung (330) als einer von einem Quantenannealer oder einem Quantengatter-Computer implementiert ist.

10. System nach Anspruch 8 oder 9, wobei die Quantenschaltung (330) in einem Quantencomputer (50) implementiert oder in einem klassischen Computer (20) simuliert ist.


## Revendications

1. Procédé mis en œuvre par ordinateur pour modifier une chaîne variable (320) dans un document (300) et générer une valeur de hachage requise, dans lequel le document (300) comprend la chaîne variable (320) et une chaîne fixe (310), le procédé comprenant :

   - une construction (S220) d'un hamiltonien sur la base de la chaîne variable (320) ;
   - un codage (S230) de la chaîne variable (320) dans un circuit quantique (330) comprenant une pluralité de qubits ;
   - une génération dans un générateur de fonction de hachage (350) d'une valeur de hachage à partir de la chaîne fixe (310) et de la sortie du circuit quantique (330) ;
   - une mesure d'une superposition de la chaîne variable (320) par un dispositif de mesure (340), dans lequel la mesure est mise en œuvre par une tomographie d'état quantique individuellement pour la pluralité des qubits ;
   - une détermination (S280) d'un chevauchement entre la valeur de hachage générée et une valeur de hachage vraie (370) ; et
   - lors de l'atteinte d'une valeur de chevauchement nulle, une détermination de la chaîne variable (320), sinon une optimisation (S270) de paramètres du circuit quantique (330).

2. Procédé selon la revendication 1, dans lequel l'optimisation (S270) des paramètres du circuit quantique (330) comprend une utilisation d'un algorithme d'optimisation classique.

3. Procédé selon la revendication 2, dans lequel l'algorithme d'optimisation classique est un procédé de descente de gradient.

4. Procédé selon la revendication 1, dans lequel le codage (S230) de la chaîne variable (320) dans le circuit quantique (330) est l'un d'un codage dans un circuit quantique paramétré ou un réseau de tenseurs.

5. Procédé selon l'une quelconque des revendications précédentes, dans lequel la construction (S220) de l'hamiltonien comprend une création d'un graphique avec une pluralité de nœuds représentant les bits de la chaîne variable (320).

6. Procédé selon la revendication 5, dans lequel le graphique est un graphique 3-régulier.

7. Procédé selon l'une quelconque des revendications précédentes, dans lequel la détermination (S280) est effectuée en calculant la distance de Hamming entre la valeur de hachage générée et la valeur de hachage vraie.

8. Système pour modifier une chaîne variable (320) dans un document (300) et générer une valeur de hachage requise, dans lequel le document (300) comprend la chaîne variable (320) et une chaîne fixe (310), le système comprenant :

   - au moins un dispositif d'entrée/sortie (30) pour entrer le document (300) ;
   - au moins un circuit quantique (330) avec une pluralité de qubits, pour coder la chaîne variable (320) ;
   - un générateur de fonction de hachage (350) pour créer des valeurs de hachage à partir d'une sortie (335) de l'au moins un circuit quantique (330) ;
   - un dispositif de mesure (340) pour mesurer une superposition de la chaîne variable (320) par une tomographie d'état quantique mise en œuvre individuellement pour la pluralité des qubits ;
   - un comparateur (360) pour comparer les valeurs de hachage créées avec une valeur de hachage vraie (370) ; et

- au moins un élément d'optimisation pour ajuster (S270) les paramètres du circuit quantique (330).

9. Système selon la revendication 8, dans lequel le circuit quantique (330) est mis en œuvre comme l'un d'un circuit de recuit quantique ou d'un ordinateur à porte quantique.

10. Système selon la revendication 8 ou 9, dans lequel le circuit quantique (330) est mis en œuvre dans un ordinateur quantique (50) ou simulé dans un ordinateur classique (20).

Fig 1

## Fig. 2

| | | |
|---|---|---|
| S200 Start | S210 Input string | S220 Encode variable string |
| S230 Read quantum state | S240 Pass to hash function generator | S250 Produce hash value |
| S260 Forward to classical processor. | S270 Optimize input parameters | S280 Determine overlap |

## Fig. 3

Proposed superposition
of variable strings

Conjugate gradient optimization

320
Variable string

$|+\rangle^{\otimes N}$

310
Fixed string

300

VQC
330

340

335

Hash Function

350

$\langle H \rangle$
$\langle \vec{\nabla} H \rangle$

380

360

string'

370

Fig 4

Fig 5

Fig 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022292385 A1

**Non-patent literature cited in the description**

- **WANG ZEGUO et al.** Variational quantum attacks threaten advanced encryption standard based symmetric cryptography. *SCIENCE CHINA INFORMATION SCIENCES*, 18 July 2022
- A Secure One-Way Hash Function Built from DES. **WINTERNITZ ROBERT S**. SECURITY & PRIVACY. IEEE, 29 April 1984
- **JACK Y ARAZ et al.** *Classical versus Quantum: comparing Tensor Network-based Quantum Circuits on LHC data*, 21 February 2022
- **ZEGUO WANG** ; **SHIJIE WEI** ; **GUI-LU LONG** ; **LAJOS HANZO**. *A Variational Quantum Attack for AES-like Symmetric Cryptography*, 07 May 2022
- **DENISENKO D.V** ; **NIKITENKOVA M.V**. *Application of Grover's Quantum Algorithm for SDES Key Searching*, 03 September 2019